# EUROPEAN PATENT APPLICATION

(11) **EP 1 052 083 A1**
(43) Date of publication of application: **15.11.2000**
(21) Application number: 99302224.3
(22) Date of filing: 23.03.1999
(51) Int. Cl.: B29C 70/52

(54) **Fibre reinforced composites**

(71) Applicant: BRITISH AEROSPACE PUBLIC LIMITED COMPANY, Farnborough, Hampshire GU14 6YU (GB)
(72) Inventor: The designation of the inventor has not yet been filed
(74) Representative: Edis, Ronald Malcolm

(57) **Abstract**

A method is disclosed for producing a fibre reinforced composite by pultrusion having variable strength characteristics along its length including the steps of drawing through a pultrusion die 38 a series of reinforcing fibres 32 to form a pultruded fibre composite product. The method is characterised by incorporating in the reinforcing fibres 14 prior to the pultrusion step additional fibres 20 to form modified fibres 32 having a characteristic such as tenacity or modulus different from that of the first said reinforcing fibres 14 in order to vary the strength characteristics of the final composite 42 substantially without altering the cross-sectional area thereof. A curable or settable plastics material 40 is applied around the fibres during the pultrusion step and which is cured, part-cured or allowed to set to form the finished composite 42.

## Description

This invention relates to fibre reinforced composites, in particular those used in high strength applications such as aircraft structures.

It is known to manufacture by pultrusion, composite structural members for use as skin stringers for aircraft wing skins, for example. Such pultruded members are currently manufactured by drawing reinforcing fibres, such as carbon fibres, through a die, applying liquid plastics reinforcing material to the fibres, and curing the whole to form a fibre reinforced composite structural member of the required cross-sectional shape and of indefinite length.

There exists a requirement to provide structural members such as wing skin stringers with variable strength characteristics along their length. It is currently proposed to provide a member with variable cross-section in order to achieve the variation in strength required. Unfortunately such changes in cross-sectional shape for pultruded members are not easy to achieve. Currently variable shape pultrusion dies are being investigated with a view to allowing changes in cross-sectional shape of the structural member along its length. It will be appreciated that such variable cross-section dies will be somewhat complex and possibly difficult to produce. In addition their reliability and/or longevity may be limited.

According to the present invention there is provided a method of producing a fibre reinforced composite by pultrusion having variable strength characteristics along its length including the steps of drawing through a pultrusion die a series of reinforcing fibres to form a pultruded fibre composite product characterised by incorporating in the reinforcing fibres prior to the pultrusion step additional fibres having a characteristic such as tenacity or modulus different from that of the first said reinforcing fibres in order to vary the strength characteristics of the final product substantially without altering the cross-sectional area thereof, a curable or settable plastics material being applied around the fibres and which is cured or allowed to set to form the finished composite.

Preferably, the additional fibres are either spliced between sections of the reinforcing fibres, or interlaced or otherwise distributed amongst the reinforcing fibres.

The fibres may be pre-impregnated with the plastics material before being drawn through the protrusion die. If the fibres are not pre-impregnated then a plastics material may be introduced amongst the fibres as they are drawn through the die. Where the plastics material is curable, the pultrusion die may be heated to effect curing or part curing of the plastics.

The fibres may be in the form of individual strands, or may form woven and/or non-woven webs.

A method in accordance with the invention will now be described by way of example, and with reference to the accompanying drawings in which:
**Figure 1** is a diagrammatic view of an apparatus for splicing fibres for use in a method in accordance with the invention;
**Figure 2a** is an enlarged diagrammatic view of box A in Figure 1;
**Figure 2b** is an enlarged diagrammatic view of box A in Figure 1; and
**Figure 3** is a diagrammatic view of a pultrusion apparatus for producing a fibre reinforced composite in accordance with the invention.

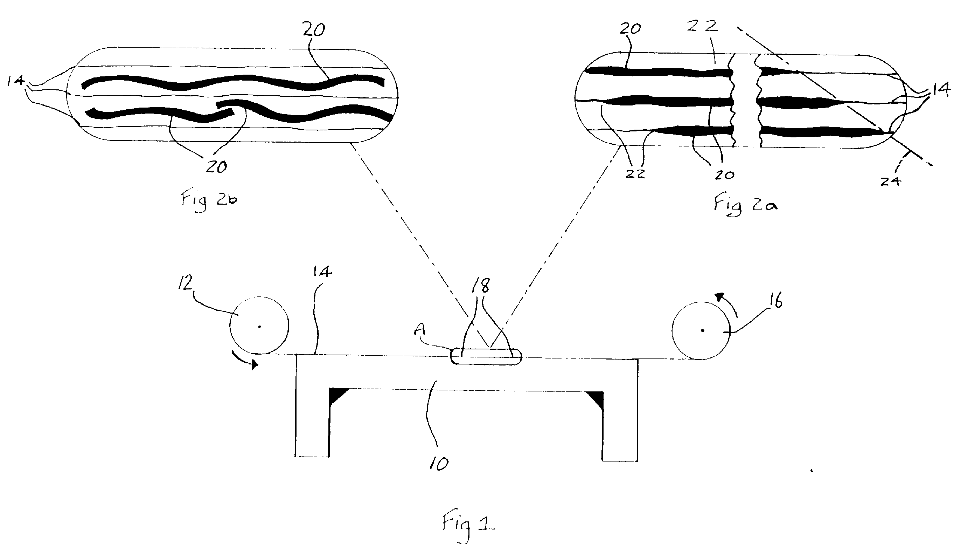

Figure 1 shows an apparatus for splicing fibres and comprises a substantially horizontal work bench 10, a source roll 12 of reinforcing fibres 14 and a product receiving roll 16.

Reinforcing fibres 14 are drawn off the source roll 12, across the work bench 10 and wound onto the product receiving roll 16.

Additional fibres 20 are provided which can either be spliced between sections of the reinforcing fibres (Figure 2a) to provide an area 18 having a characteristic such as tenacity or modulus different from that of the fibres 14, or can be interlaced or otherwise distributed amongst the reinforcing fibres 14 (Figure 2b).

When the additional fibres 20, are spliced into the reinforcing fibres 14 as shown in Figure 2a, the ends of the fibres may either be knotted together or air blown so that the fibres become matted together to form a joint 22. It should be noted that the joint 22 so formed primarily allows continuity of the pultrusion process.

It should be further noted that it is preferable for the introduction of a change in fibre type to be phased over the predetermined area or areas 18. By phasing the introduction of the additional fibres, stress on individual joints between the fibres is spread over a greater area thus minimising stress concentration.

In Figure 2a it will be noted that the phased introduction lends to the additional fibres 20 meeting the reinforcing fibres 14 on an oblique plane 24 although it will be understood that any other suitable phased introduction, e.g. a zig-zag, could be used.

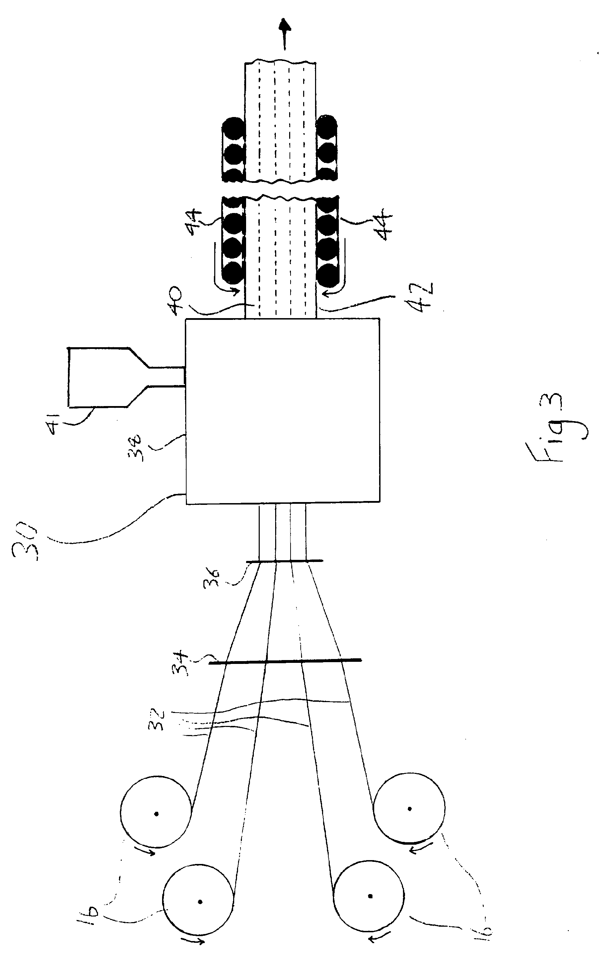

The product receiving roll 16 is then transferred to a pultruding apparatus 30 as shown in Figure 3. The pultruding apparatus 30 includes supports (not shown) for a number of product receiving rolls 16. In the present example, four rolls 16 are carried by the supports. The modified fibres, indicated at 32, are drawn from the rolls 16 and aligned through guide vanes 34 and 36 so as to position them in a predetermined pattern.

The modified fibres 32 are then pulled through a pultrusion die 38. Resin 40 from a supply 41 is injected amongst the fibres 32 as they are drawn through the die 38 to produce a fibre reinforced composite 42 of substantially constant cross-sectional area. The fibre reinforced composite 42 is part drawn out through the die 38 by reciprocating caterpillar pullers 44.

Where the additional fibres 20 are distributed amongst the reinforcing fibres 14 as in Figure 2b there is a reduction in the ratio of fibre 32 to resin 40 content of the final composite 42 compared to the composition in which the fibres are spliced as shown in Figure 2b.

The fibres 32 may also be pre-impregnated with resin before drawing them through the pultrusion die 38. That may alleviate, or avoid altogether, the need to inject resin 40 amongst the fibres 32 as they are pulled through the die 38.

The fibres 32 may be in the form of a fabric, which may be woven and/or non-woven.

If the resin is curable, the pultrusion die 38 may be heated to effect the curing or part curing of the resin.

In the present example, the plastics material used is a resin, although it may also be any adhesive/matrix system.

The length of the predetermined area 18 along the fibres 14 can be selected as required.

The above methods enable the production of a fibre reinforced composite having variable strength characteristics along its length without alteration of the cross-sectional area of the pultrusion.

## Claims

1. A method of producing a fibre reinforced composite by pultrusion having variable strength characteristics along its length including the steps of drawing through a pultrusion die a series of reinforcing fibres to form a pultruded fibre composite product characterised by incorporating in the reinforcing fibres prior to the pultrusion step additional fibres having a characteristic such as tenacity or modulus different from that of the first said reinforcing fibres in order to vary the strength characteristics of the final product substantially without altering the cross-sectional area thereof, a curable or settable plastics material being applied around the fibres and which is cured or allowed to set to form the finished composite.

2. A method according to claim 1 in which the additional fibres are spliced between sections of the reinforcing fibres.

3. A method according to claim 1 in which the additional fibres are interlaced amongst the reinforcing fibres.

4. A method according to claim 1, 2 or 3 in which the plastics material is applied to the fibres, within the die.

5. A method according to any one of the preceding claims in which the fibres are pre-inpregnated with a plastics material before being drawn through the die.

6. A method according to any one of the preceding claims in which the fibres are in the form of a woven web.

7. A method according to any one of claims 1 - 5 in which the fibres are in the form of a non-woven web.

8. A method of producing a fibre reinforced composite substantially as described herein with reference to the accompanying drawings.

9. A composite structural member produced by a method according to any preceding claim.

10. A composite structural member according to claim 9 in the form of a stringer for use on an aircraft.
